# EUROPÄISCHE PATENTSCHRIFT

(11) **EP 1 251 298 B1**
(45) Veröffentlichungstag und Bekanntmachung des Hinweises auf die Patenterteilung: **14.05.2008**
(21) Anmeldenummer: 02007787.1
(22) Anmeldetag: 06.04.2002
(51) Int. Cl.: F16H 61/20

(54) **Verfahren zur Stillstandsschaltung eines Fahrzeuggetriebes**
Control method for a vehicle transmission during stand still
Système de commande d'une boîte de vitesses d'un véhicule, tel système permettant de garantir l'arrêt du véhicule

(30) Priorität: 12.04.2001 DE 10118363
(43) Veröffentlichungstag der Anmeldung: 23.10.2002
(73) Patentinhaber: ZF FRIEDRICHSHAFEN AG, 88038 Friedrichshafen (DE)
(72) Erfinder: Vahlensieck, Bernd, 94034 Passau (DE); Grad, Karl, 94161 Ruderting (DE)

(56) Entgegenhaltungen:
- EP-A2- 0 889 260
- DE-A1- 2 944 928
- DE-A1- 4 316 784
- DE-A1- 19 728 611
- DE-A1- 19 800 880
- DE-A1- 19 846 955

## Beschreibung

Die vorliegende Erfindung betrifft ein Verfahren zur Stillstandsschaltung für ein Fahrzeug mit einem Getriebe, welches durch jeweils eine eigene Kupplung schaltbare Vorwärts- und Rückwärtsgänge aufweist gemäß dem Oberbegriff des Patentanspruchs 1.

Derartige Getriebe werden oft als Getriebe mit einer Reversiereinheit ausgebildet und werden bevorzugterweise in land- und forstwirtschaftlichen Nutzfahrzeugen eingesetzt.

Die DE 19728611 A1 der Anmelderin beschreibt ein stufenloses Getriebe der eingangs genannten Art mit zwei Fahrbereichen, einem Leistungszweig mit stufenlos einstellbarer Drehzahl in Form eines Variators und einem mechanischen Leistungszweig, der im ersten Fahrbereich über eine Kupplung K1 mit einem als Summierungsgetriebe wirkenden Planetengetriebe trieblich verbunden wird. Dieses Getriebe enthält auch eine weitere Kupplung K2, die in einem zweiten Fahrbereich bei geöffneter Kupplung K1 den Ausgang des Variators mit dem Ausgang des Planetengetriebes verbindet, wobei die beiden durch die Kupplungen K1 und K2 schaltbaren Fahrbereiche wahlweise über eine Kupplung V für die Vorwärtsfahrt und eine Kupplung R für die Rückwärtsfahrt mit der Getriebeantriebswelle verbindbar sind. Hierbei sind die Kupplungen V und R als Doppelkupplung ausgebildet, die als Anfahrkupplung und Reversiereinheit dient.

Der vorliegenden Erfindung liegt die Aufgabe zugrunde, ein Verfahren zur Stillstandsschaltung für ein Fahrzeug mit einem Getriebe der eingangs genannten Art anzugeben, welches das Anfahren und Anhalten mit schwerer Last unter schwierigen Bedingungen, wie beispielsweise am Berg ermöglicht, ohne dass die Bremse betätigt werden muss.

Des weiteren soll das Verfahren keine zusätzlichen Bauteile benötigen.

Diese Aufgabe wird durch die Merkmale des Patentanspruchs 1 gelöst. Weitere Ausgestaltungen und Varianten gehen aus den Unteransprüchen hervor.

Demnach wird vorgeschlagen, die Kupplung für die Vorwärtsfahrt V und diejenige für die Rückwärtsfahrt R einer vorhandenen Reversiereinheit gleichzeitig zu schließen.

Voraussetzung dafür ist, dass zwischen Motor und V/R-Reversiereinheit weitere Kupplungen angeordnet sind, die während dieser Funktion geöffnet werden können, wie beispielsweise die Kupplungen K1 und K2 nach dem genannten Stand der Technik.

Die erfindungsgemäße Vorgehensweise weist den Vorteil auf, dass der Stillstand als solcher nicht geregelt werden muss. Zudem ist die Implementierung des Verfahrens sehr einfach und kostengünstig, da lediglich eine Erweiterung der Steuerung erforderlich ist.

Gemäß einer Variante des erfindungsgemäßen Verfahrens ist vorgesehen, für den Fall einer Leistungsverzweigung mit einem Kettenwandler die Übersetzungen so zu wählen, dass sich im Leistungsverzweigungsbetrieb die Drehzahlen gegeneinander aufheben und so eine Abtriebsdrehzahl Null erzeugt wird.

Als weitere Lösung wird erfindungsgemäß vorgeschlagen, zum Zweck der Realisierung der Stillstandsschaltung eine Hydrostat-Einheit zu verwenden, da an der Hydrostat-Einheit eine Abtriebsdrehzahl Null eingestellt werden kann.

Die Erfindung ist grundsätzlich auf alle Getriebekonzepte übertragbar, bei denen der Vorwärts- und der Rückwärtsgang durch eine eigene Lamellenkupplung geschaltet werden und weitere Kupplungen vorhanden sind, die während dieser Funktion geöffnet werden können.

Besonders vorteilhaft ist das erfindungsgemäße Verfahren insbesondere bei Konzepten, die eine kraftschlüssige Fahrgeschwindigkeit Null ermöglichen, wie beispielsweise bei hydrostatischen Baumaschinenantrieben sowie Automatgetrieben mit hydrodynamischem Drehmoment-Wandler.

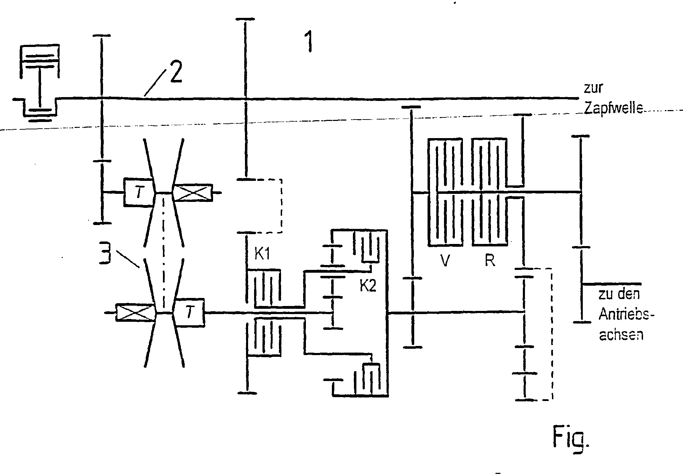

Im folgenden wird die Erfindung anhand der beigefügten Figur am Beispiel eines Leistungsverzweigungsgetriebes mit einer Reversiereinheit näher erläutert.

Das dargestellte Getriebe 1 mit der Antriebswelle 2 weist ein Umschlingungsgetriebe 3 sowie zwei Kupplungen K1 und K2 auf. Des weiteren ist eine Reversiereinheit mit zwei Kupplungen V und R für Vorwärts- bzw. Rückwärtsfahrt vorgesehen.

Gemäß der Erfindung werden die Kupplungen V und R gleichzeitig geschlossen, wodurch der Abtrieb blockiert wird. Während des so erreichten Stillstandes werden die Kupplungen K1 und K2 geöffnet.

Als notwendige Maßnahme für die Realisierung des erfindungsgemäßen Verfahrens erweist sich die entsprechende Erweiterung der Steuerung, wobei keine weiteren Bauteile erforderlich sind, was sich auf die Herstellungs- und Wartungskosten positiv auswirkt.

In der übergeordneten Steuerung wird für das Anhalten die Reihenfolge der Kupplungsschaltungen wie folgt festgelegt:

Bei Erreichen des Stillstandes des Fahrzeugs Schließen der Kupplung R (zusätzlich zur geschlossenen Kupplung V, beim Anhalten aus Vorwärtsfahrt) bzw. V (zusätzlich zur geschlossenen Kupplung R, beim Anhalten aus Rückwärtsfahrt), möglichst mit moduliertem Übergang Öffnen der Kupplung K1. Das Anfahren erfolgt entsprechend mit umgekehrter Schaltreihenfolge der Kupplungen K1 und V (Vorwärts-Anfahren) bzw. R (Rückwärts-Anfahren).

Durch das erfindungsgemäße Verfahren ist ein bequemes und sicheres Anhalten und Anfahren mit schwerer Last am Berg gewährleistet.

### Bezugszeichen

- 1: Getriebe
- 2: Antriebswelle
- 3: Umschlingungsgetriebe

- V: Vorwärtskupplung
- R: Rückwärtskupplung
- K1: Kupplung
- K2: Kupplung

## Patentansprüche

1. Verfahren zur Stillstandsschaltung für ein Fahrzeug mit einem Getriebe, welches durch jeweils eine eigene Kupplung (V, R) schaltbare Vorwärts- und Rückwärtsgänge und mindestens eine weitere Kupplung (K1, K2) aufweist, **dadurch gekennzeichnet, dass** bei geschlossener Vorwärtskupplung (V) zusätzlich die Rückwärtskupplung (R)und bei geschlossener Rückwärtskupplung (R)zusätzlich die Vorwärtskupplung (V) geschlossen wird, bei gleichzeitigem Öffnen der mindestens einen weiteren Kupplung (K1, K2).

2. Verfahren zur Stillstandsschaltung nach Anspruch 1, **dadurch gekennzeichnet, dass** in einer übergeordneten Steuerung die Schaltreihenfolge der jeweils zwei zu schaltenden Kupplungen (V oder R sowie K1) für das Anfahren automatisiert durchgeführt werden kann.

## Claims

1. Method for stationary shifting in a vehicle with a transmission which by means of a separate dutch (V, R) each for forward and reverse and at least one further dutch (K1, K2) features shiftable forward and reverse gears, **characterized in that** with dosed forward dutch (V) also the reverse dutch (R) and with dosed reverse dutch (R) also the forward dutch (V) is dosed, with simultaneous opening of at least one further dutch (K1, K2).

2. Method for stationary shifting acc. to claim 1, **characterized in that** the shifting sequence of the two cluthes (V or R and K1) to be shifted in each case for starting can be automated by means of an overriding control.

## Revendications

1. Procédé de changement de rapports à l'arrêt pour un véhicule doté d'une boîte de vitesses comportant des embrayages dédiés (V, R) permettant d'engager des vitesses de marche avant et des vitesses de marche-arrière et au moins un autre embrayage (K1, K2), **caractérisé en ce que** avec embrayage d'engagement des vitesses de marche avant (V) fermé est fermé en plus l'embrayage d'engagement des vitesses de marche-arrière (R) et avec embrayage d'engagement de vitesses de marche-arrière (R) fermé est fermé en plus l'embrayage d'engagement des vitesses de marche avant (V), en ouvrant en même temps l'au moins un embrayage supplémentaire (K1, K2).

2. Procédé de changement de rapports à l'arrêt selon la revendication 1, **caractérisé en ce que** dans un boîtier de commande principal il est possible de définir l'exécution de la succéssion de l'engagement des deux embrayages respectivement à actionner (V ou R et K1) pour permettre le démarrage de façon automatisée.
